# EUROPEAN PATENT SPECIFICATION

(11) **EP 2 835 798 B1**
(45) Date of publication and mention of the grant of the patent: **24.06.2020**
(21) Application number: 14179912.2
(22) Date of filing: 05.08.2014
(51) Int. Cl.: G10L 15/22, G06K 9/62

(54) **Interfacing device and method for supporting speech dialogue service**
Schnittstellenbildungsvorrichtung und Verfahren zur Unterstützung eines Sprachdialogdienstes
Dispositif d'interface et procédé pour un service de dialogue vocal

(30) Priority: 05.08.2013 KR 20130092649
(43) Date of publication of application: 11.02.2015
(73) Proprietor: Samsung Electronics Co., Ltd., Gyeonggi-do 443-742 (KR)
(72) Inventor: Jeon, Hayoung, 443-742 Gyeonggi-do (KR); Kim, Sora, 443-742 Gyeonggi-do (KR); Kim, Heewoon, 443-742 Gyeonggi-do (KR); Ahn, Yumi, 443-742 Gyeonggi-do (KR); Ahn, Jihyun, 443-742 Gyeonggi-do (KR)
(74) Representative: HGF Limited

(56) References cited:
- WO-A1-2011/116309
- US-A1- 2005 038 814

## Description

### TECHNICAL FIELD

Certain embodiments of the present invention provide an interfacing device and method for supporting a speech dialogue service. For example, certain embodiments of the present invention enable a speech dialogue service allowing a multi-modal input.

### BACKGROUND

A speech dialogue service allows a voice-based interaction between a user and a voice agent (e.g. a device or system supporting the speech dialogue service). Currently, such a speech dialogue service is offered or supported by many interfacing devices (e.g. devices providing a user interface), including various types of portable terminal. However, often the speech dialogue service fails to sufficiently utilize any type of input/output interface other than voice, thus limiting expression, convenience and flexibility. Further, as the length of a voice input increases, a possibility of errors in voice recognition may also increase.

In view of the above issues, multi-modal interface techniques based on various interfaces have been introduced, see e.g. WO 2011/116309 A1.

### SUMMARY

It is an aim of certain embodiments of the present invention to address, solve, mitigate or obviate, at least partly, at least one of the problems and/or disadvantages associated with the related art, for example at least one of the above-mentioned problems and/or disadvantages. Certain embodiments of the present invention aim to provide at least one advantage over the related art, for example at least one of the advantages described below.

According to the invention, there are provided a method as set forth in claim 1, a device as set forth in claim 6, and a medium as set forth in claim 11. Preferred embodiments are set forth in the dependent claims.

Other aspects, advantages, and salient features of the present invention will become apparent to those skilled in the art from the following detailed description, which, taken in conjunction with the annexed drawings, discloses various embodiments of the present invention.

### BRIEF DESCRIPTION OF THE DRAWINGS

The above and other aspects, and features and advantages of certain exemplary embodiments and aspects of the present invention will be more apparent from the following detailed description when taken in conjunction with the accompanying drawings, in which:
FIG. 1 is a block diagram illustrating a system for supporting a speech dialogue service according to an exemplary embodiment of the present invention;
FIG. 2 is a flow diagram illustrating a method for executing a speech dialogue service at a system according to an exemplary embodiment of the present invention;
FIG. 3 is a flow diagram illustrating a method for executing a speech dialogue service at an interfacing device according to an exemplary embodiment of the present invention;
FIG. 4 is a flow diagram illustrating a detailed process of a text extraction operation illustrated in FIG. 3 according to an exemplary embodiment of the present invention;
FIG. 5 is a table illustrating an example of determining an associated content provider at a server according to an exemplary embodiment of the present invention; and
FIGS. 6A and 6B are screenshots illustrating a process of executing a speech dialogue service at an interfacing device according to exemplary embodiments of the present invention.

Throughout the drawings, it should be noted that the same or similar reference numbers may be used to denote the same or similar elements, features, and structures.

### DETAILED DESCRIPTION

The following description of exemplary embodiments of the present invention, with reference to the accompanying drawings, is provided to assist in a comprehensive understanding of the present invention, as defined by the claims. The description includes various specific details to assist in that understanding, but these are to be regarded as merely exemplary. Accordingly, those of ordinary skill in the art will recognize that various changes and modifications of the various embodiments described herein may be made without departing from the scope of the present invention.

Detailed descriptions of well-known functions, processes, operations, features, elements, structures and constructions may be omitted for clarity and conciseness, and to avoid obscuring the subject matter of the present invention.

The terms and words used in the following description and claims are not limited to the bibliographical meanings, but are merely used to enable a clear and consistent understanding of the present invention. Accordingly, it should be apparent to those skilled in the art that the following description of various embodiments of the present invention is provided for illustration purpose only and not for the purpose of limiting the present invention, as defined by the appended claims.

Throughout the description and claims of this specification, the words "comprise", "include" and "contain" and variations of the words, for example "comprising" and "comprises", means "including but not limited to", and is not intended to (and does not) exclude other features, elements, components, integers, steps, processes, operations, characteristics, properties and/or groups thereof.

Throughout the description and claims of this specification, the singular forms "a," "an," and "the" include plural referents unless the context clearly dictates otherwise. Thus, for example, reference to "a signal" includes reference to one or more of such signals.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Features, elements, components, integers, steps, processes, operations, functions, characteristics, properties and/or groups thereof described in conjunction with a particular aspect, embodiment or example of the invention are to be understood to be applicable to any other aspect, embodiment or example described herein unless incompatible therewith.

Throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

In this disclosure, the term "multi-modal" refers to the use of two or more input/output mechanisms, including input/output mechanisms of two or more different types, in an interface between a human being (e.g. a user) and a machine (e.g. a device or system). For example, a multi-modal input may be made using one or more of voice recognition, a keyboard, a keypad, a touch sensor, an image capture, and the like. Additionally, the expression "voice input" refers to an input based on a user's voice received through a microphone. In certain embodiments, a voice input may be regarded as a normal or typical type of interfacing used in a speech dialogue service. On the other hand, the expression "non-voice input" refers to any suitable type of input other than a voice input. An input mode switch may be performed to switch between a first input mode, for receiving inputs of a first type (e.g. voice inputs) and a second input mode, for receiving inputs of a second type. The input mode switch may be performed according to an input of the first type in the first input mode.

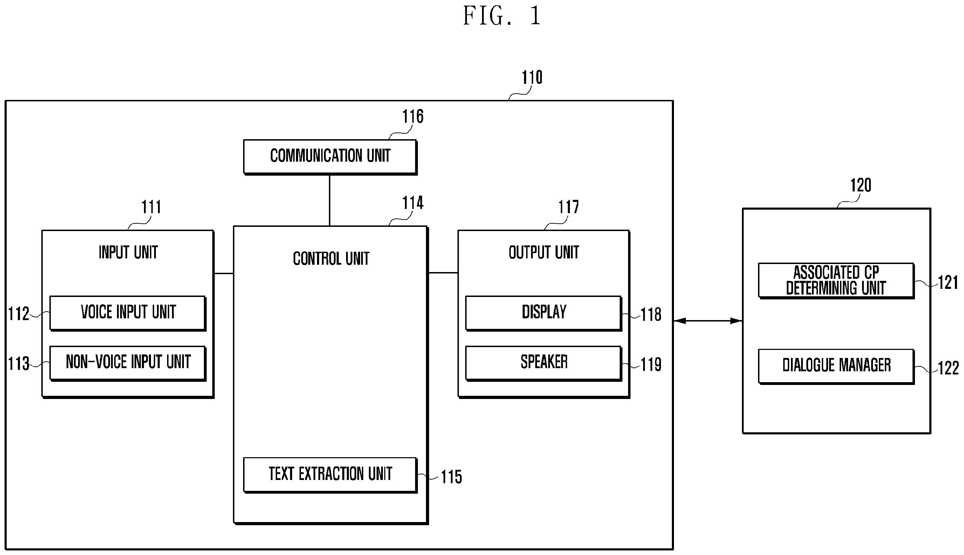

FIG. 1 is a block diagram illustrating a system for supporting a speech dialogue service according to an exemplary embodiment of the present invention.

Referring to FIG. 1, the system for supporting a speech dialogue service includes an interfacing device 110 and a server 120.

The interfacing device 110 is a device that supports a speech dialogue service between a user and a voice agent. The interfacing device 110 has the ability to communicate with the server 120 via a network in order to derive a response to a user input from a voice agent. A voice agent may refer to an entity (e.g. a virtual entity) that executes or supports voice interaction with a user in a speech dialogue service.

The interfacing device 110 may include an input unit 111, a control unit 114, a communication unit 116, and an output unit 117, but is not limited thereto. The skilled person will appreciate that certain embodiments of the present invention may comprise one or more units in addition to those shown in Fig. 1. In certain embodiments, one or more of the units shown in Fig. 1 may be omitted, and in certain embodiments, one or more of the units shown in Fig. 1 may be replaced with units having equivalent or corresponding functions.

The input unit 111 is configured to perform a function of receiving a user input in a speech dialogue service. The input unit 111 may include a voice input unit 112 for receiving a user's voice input, and a non-voice input unit 113 for receiving a non-voice input (i.e. an input other than a voice input). The voice input unit 112, which may comprise a microphone for example, may receive a user's voice input and convert it into a voice input signal. The non-voice input unit 113 may receive a user's non-voice input, for example text, an image, music, and the like. Text may be received as a user input, for example through a keyboard input, a touch sensor gesture input, a text copy input, and the like. Images may be received as a user input, for example through a camera function, an image selection from a list of stored images, an image copy input, and the like. Music may be received as a user input, for example while being played through a music player. As will be understood by those skilled in the art, any other input mode may be applied as an input interfacing type, and any suitable type of input may be received by the input unit 111, for example when operating in a corresponding input mode.

The control unit 114 controls the execution of a speech dialogue service. Specifically, the control unit 114 may process a user input signal received from the input unit 111 and then transmit the user input signal to the output unit 117 and the server 120.

In the case that a voice input is received, the control unit 114 may convert a voice input signal into text and then output the text to the output unit 117 to display a user input. Additionally, the control unit 114 may transmit, as a request signal, the voice input signal, or a corresponding signal (e.g. a text signal), to the server 120. When a result of dialogue recognition is received from the server 120 in response to the request signal, the control unit 114 may execute a particular function corresponding to the received result of dialogue recognition and then output a response to the output unit 117. The result of dialogue recognition may comprise, for example, information related to the user input signal, or text extracted therefrom. For example, the information may comprise a response to a request for information or a service in which the user input signal or the text extracted therefrom (e.g. provided in the request signal) comprises a parameter of the request.

Further, in the case that a non-voice input is received, the control unit 114 may include a text extraction unit 115 for extracting text from a non-voice signal corresponding to the non-voice input. For example, if an image or music file containing metadata is inputted, the text extraction unit 115 may recognize or extract text of metadata contained in the image or music file and perform a filtering or selection process for selecting a part of the text (e.g. essential text). The filtering process may be performed according to a predefined rule or a user's selection. For example, when metadata comprises description information (e.g., one or more keywords), a saving or modification time (e.g. a time the file was last saved or modified), a timestamp, copyright holder information, and any other file information, the description information may be predefined to be selected as the selected part of the text (e.g. essential text) in the filtering or selection process. The preceding example is, however, exemplary only and not to be considered as a limitation of the present invention.

In the case of an image file containing characters, the text extraction unit 115 may recognize or extract text contained in the image file through image processing (e.g. an Optical Character Recognition (OCR) process). A specific part of the extracted text (e.g. a part desired by a user) may be selected in a filtering or selection process. The filtering process may be performed according to a predefined rule or a user's selection.

The control unit 114 may output the extracted text of the non-voice input to the output unit 117 to display a user input. Additionally, the control unit 114 may transmit, as a request signal, the extracted text of the non-voice input to the server 120. When a result of dialogue recognition is received from the server 120 in response to the request signal, the control unit 114 may execute a particular function corresponding to the received result of dialogue recognition and then output a response to the output unit 117.

After the transmission of a request signal to the server 120, the control unit 114 may receive from the server 120 a message that inquires whether to apply an associated content provider (e.g. whether it is desired to use a service or content provided by the associated content provider). The associated content provider may comprise, for example, an entity providing content or a service related to the extracted text. Determination of an associated content provider will be described below.

The communication unit 116 is configured to support a communication between the interfacing device 110 and the server 120 through a wired or wireless network.

The output unit 117 may receive a dialogue content signal (i.e., a processed user input signal and a response signal of a voice agent), from the control unit 114 and then output the dialogue content signal while a speech dialogue service is executed. For example, the output unit 117 may include a display 118 and a speaker 119. In the case that a visual signal is not required for a dialogue content signal, a response of a voice agent may be outputted by means of sound only. In this case, the display 118 may be turned off and the speaker 119 may be turned on. Alternatively, both the speaker 119 and the display 118 may be turned on so as to display as text a user input and a response of a voice agent. If a user input is received as a non-voice input, the display 118 may be turned on to display text of the extracted non-voice input. In addition, the output unit 117 may display various functions and contents offered in a speech dialogue service.

The server 120 is configured to receive a user input (e.g., a request signal), from the interfacing device 110, to derive a response to the request signal from a voice agent, and to transmit a derived result to the interfacing device 110. When a voice signal is received from the interfacing device 110, the server 120 may perform a function to convert the received voice signal into text.

The server 120 may include a dialogue manager 122, which derives a response of a voice agent from a database on the basis of text corresponding to a user input. For example, if text "Google" is recognized, the dialogue manager 122 may determine that a user desires to perform a "Google search", and thereby may derive a result "access Google homepage" as a system response. This dialogue result may be transmitted to the interfacing device 110, and then the interfacing device 110 may perform access to a homepage of Google.

The server 120 may further include an associated Content Provider (CP) determining unit 121 that determines an associated content provider on the basis of text corresponding to a user input. Namely, the type or information content of the text is determined, and then an associated content provider is derived from the type or information content of the text. The type or information content of the text may be determined, for example, according to a weighted value of each category of words contained in the text. For example, if it is determined that a word contained in the text is an address type, a map service provider may be derived or determined as an associated content provider. Additionally, the server 120 may inquire whether to apply an associated content provider. For example, the server 120 may request the interfacing device 110 to check the applicability of a map service (e.g. check whether use of the map service is desired). If a user accepts the applicability of an associated content provider, the dialogue manager 122 may derive and offer a response of a voice agent on the basis of the associated content provider.

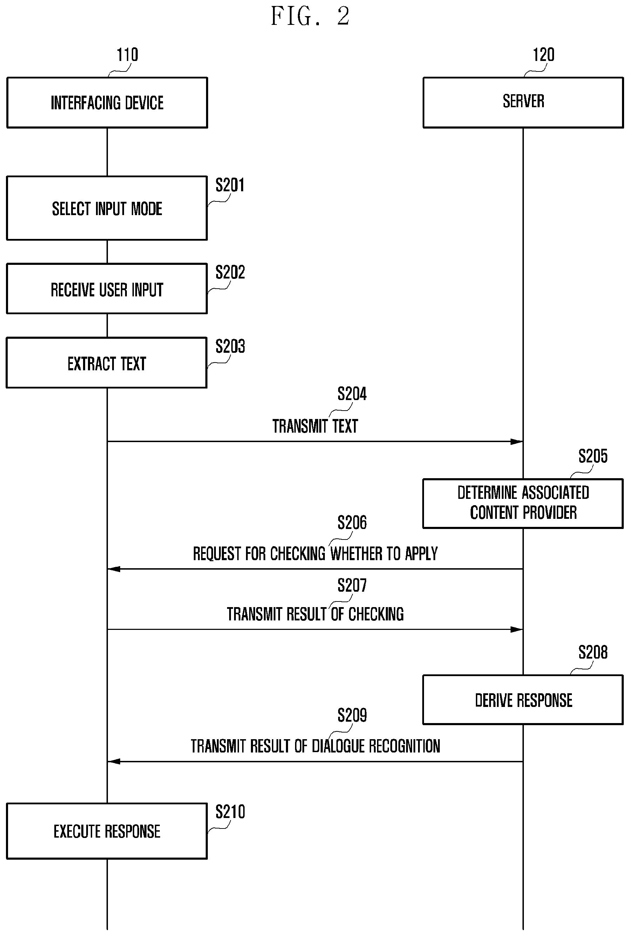

FIG. 2 is a flow diagram illustrating a method for executing a speech dialogue service at a system according to an exemplary embodiment of the present invention.

Referring to FIG. 2, at operation S201, the interfacing device 110 may select an input mode. A voice input may be set as a default input mode of a speech dialogue service, and thereafter a switch of input modes may be performed, for example through a voice command. For example, if a voice command "open camera" is received, the interfacing device 110 may switch an input mode to a mode for receiving an image input through a camera.

At operation S202, the interfacing device 110 may receive a user input on the basis of the selected input mode. Then, at operation S203, the interfacing device 110 may extract text, for example comprising content of dialogue, from the received user input, as previously discussed above in relation to FIG. 1.

Thereafter, at operation S204, the interfacing device 110 may transmit the extracted text to the server 120.

Optionally, at operation S205, the server 120 may determine an associated content provider from the received text. At operation S206, the server 120 may transmit to the interfacing device 110, a request for checking the applicability of the associated content provider. Then, at operation S207, the interfacing device 110 may transmit to the server 120 a result of checking the applicability of the associated content provider.

At operation S208, the server 120 may derive a response of a voice agent based on the received text, and optionally the received checking result for the applicability of the associated content provider. Then, at operation S209, the server 120 may transmit to the interfacing device 110 a result of dialogue recognition based on the derived response.

At operation S210, the interfacing device 110 may execute a response on the basis of the received dialogue recognition result and offer it to a user.

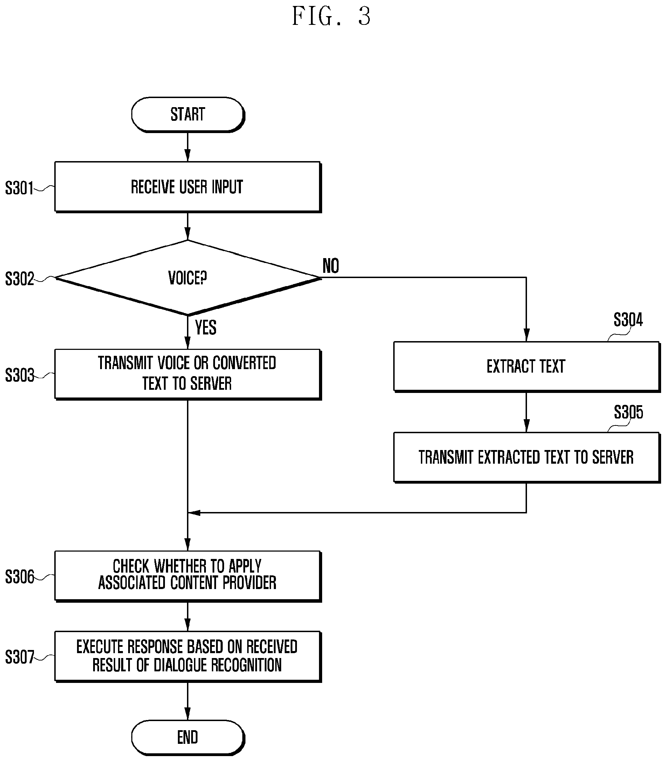

FIG. 3 is a flow diagram illustrating a method for executing a speech dialogue service at an interfacing device according to an exemplary embodiment of the present invention.

Referring to FIG. 3, the interfacing device 110 receives a user input at operation S301 and then determines at operation S302 whether the received user input is a voice input. In the case of a voice input, the interfacing device 110 transmits to the server 120 a voice signal, or a signal comprising text converted from the voice, at operation S303.

In the case of a non-voice input, the interfacing device 110 extracts text from the non-voice input at operation S304 and then transmits a signal comprising the extracted text to the server 120 at operation S305.

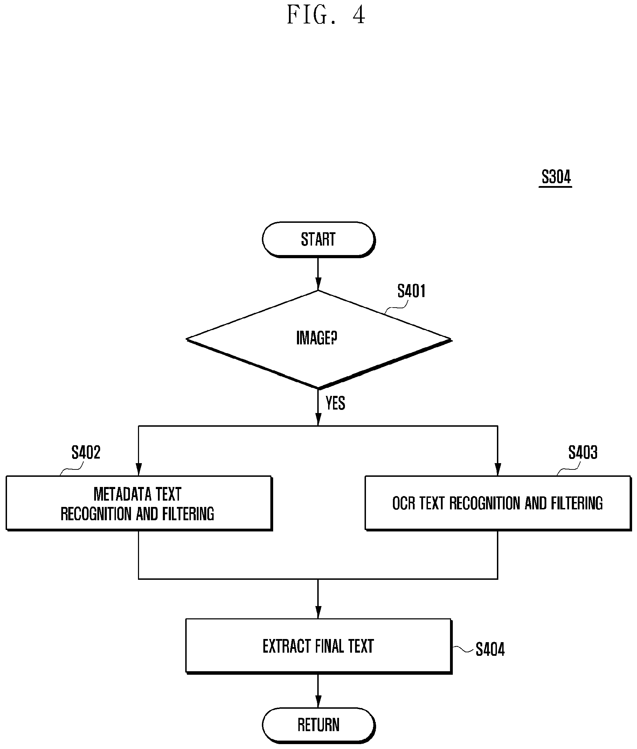

FIG. 4 is a flow diagram illustrating a detailed process of text extraction operation illustrated in FIG. 3 according to an exemplary embodiment of the present invention.

Referring to FIG. 4, in detail the operation S304 is illustrated. First, it is determined whether a non-voice input comprises an image input at operation S401. If the non-voice input comprises an image input, the interfacing device 110 may recognize text of metadata contained in an image file and then perform a filtering process at operation S402, and/or may recognize text by performing OCR from the image file and then perform a filtering process at operation S403. If only one of the operations S402 and S403 is performed, text extracted through the performed operation may be offered. However, if both operations S402 and S403 are performed, text extracted through one of the operations may be offered.

Referring back to FIG. 3, at operation S306, the interfacing device 110 checks the applicability of an associated content provider determined by the server 120 and then transmits a checking result to the server 120. At operation S307, the interfacing device 110 receives a result of dialogue recognition from the server 120 and then, based on the received result, executes a response to offer it to a user. For example, the interfacing device 110 may output information related to the result of dialogue recognition to a user, or executes a function using information related to the result of dialogue recognition.

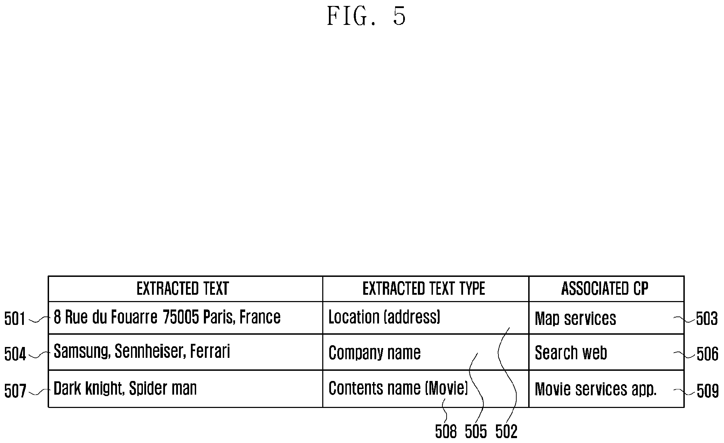

FIG. 5 is a table illustrating an example of determining an associated content provider at a server according to an exemplary embodiment of the present invention.

Referring to FIG. 5, in the case that text extracted by the interfacing device 110 is transmitted to the server 120, the associated content provider determining unit 121 may determine the type of the extracted text by analyzing words contained in the text. For example, as illustrated in FIG. 5, if the extracted text is "8 Rue du Fouarre 75005 Paris, France" 501, this text contains the name of a country, the name of a city, and the name of a street, and therefore a text type may be determined as a location (address) 502. As another example, if the extracted text is "Samsung, Sennheiser, Ferrari" 504, a text type may be determined as a company name 505. As a further example, if the extracted text is "Dark knight, Spider man" 507, a text type may be determined as a content (movie) name 508.

If a text type is a location (address) 502, a map service 503 may be offered or determined as an associated content provider. If a text type is a company name 505, a search web 506 may be offered or determined as an associated content provider. If a text type is a content (e.g. movie) name 508, a content (e.g. movie) service application 509 may be offered or determined as an associated content provider.

If a user accepts the applicability of an associated content provider offered to the interfacing device 110 (e.g. the user confirms the associated content provider that has been offered or determined), the server 120 may request the interfacing device 110 to display thereon text-related information in the associated content provider. For example, the interfacing device 110 may offer, as a response to text extracted from a user input, text-related information in the associated content provider to a user. Text-related information in the associated content provider may comprise information related to the text provided by the associated content provider.

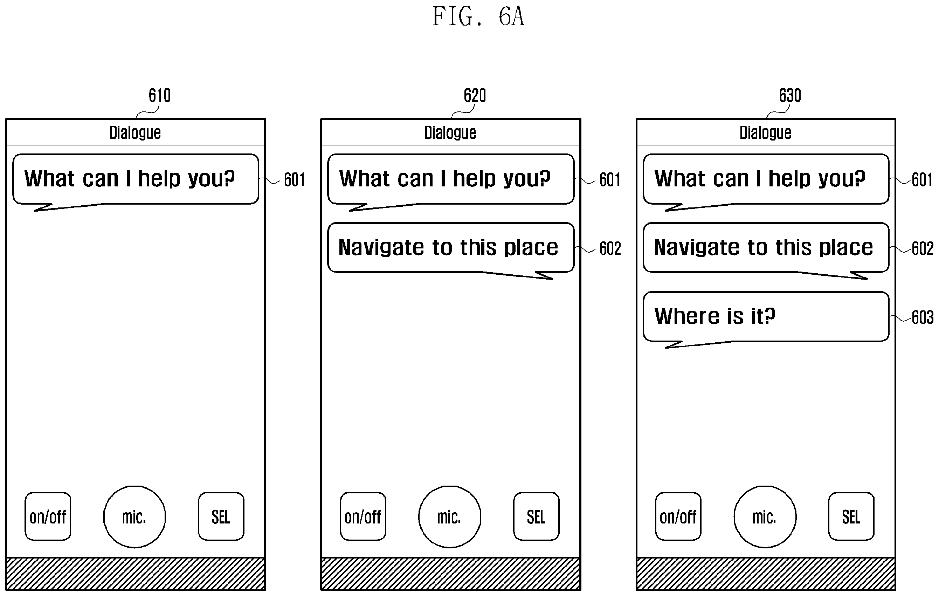

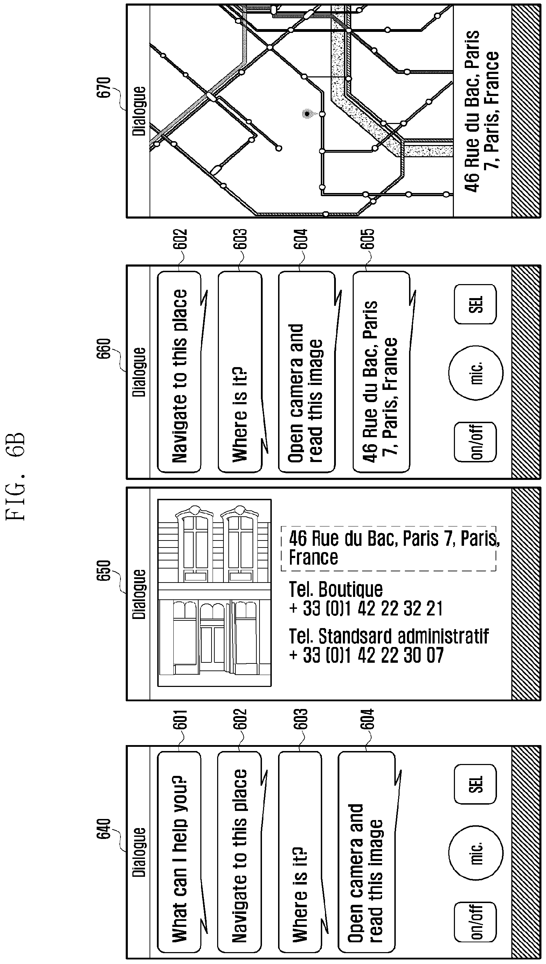

FIGS. 6A and 6B are screenshots illustrating a process of executing a speech dialogue service at an interfacing device according to exemplary embodiments of the present invention.

Referring first to FIG. 6A, the interfacing device 110 may display a dialogue between a user and a voice agent on the screen. In an embodiment, some icons, for example an icon (on/off) for controlling an on-off status of a speech dialogue service, an icon (mic.) for controlling the activation of a microphone, an icon (SEL) for selecting an input mode, etc. may be displayed on the screen.

When a voice agent offers a comment 601 notifying a speech dialogue service as illustrated in screenshot 610, a user may offer, as a response, a voice input 602 to a voice agent as illustrated in screenshot 620. In this case, a user inputs a voice "Navigate to this place". In reply, a voice agent offers a response 603 corresponding to a user's voice input as illustrated in screenshot 630. In this case, a voice agent offers a response "Where is it?".

Referring to FIG. 6B, a switch of input modes and a response of an interface according to an image input is illustrated.

As illustrated in screenshot 640, a user may desire to offer an image input in response to a request of a voice agent and may therefore require a switch of input modes. The switch of input modes may be performed, for example, using a voice command. In this case, an input mode may be switched through a voice input 604 "Open camera and read this image".

Then, as illustrated in screenshot 650, the interfacing device 110 may capture an image by executing a camera and extract a text part from the captured image. For example, text contained in the captured image may be recognized through an OCR process, and a desired text part may be selected among the recognized text through a filtering process. As illustrated in screenshot 660, a text part 605 extracted from an image input may be displayed as a user response on the screen. Thereafter, a voice agent outputs a response to the extracted text part 605. Since the extracted text part 605 indicates a location (address), a voice agent may offer a map service for representing the location (address) as illustrated in screenshot 670.

In the embodiments described above, a server 120 is used. However, the skilled person will appreciate that, in certain embodiments, some or all of the functions of the server 120 may be performed by another entity. For example, in certain embodiments, some or all of the functions of the server 120 may be performed by the interfacing device 110. For example, in the example illustrated in Figs. 6A and 6B, if the interfacing device stores suitable map data, then the functions of the server 120 may be performed by the interfacing device 110. In the case that all of the functions of the server 120 are performed by another entity, the server 120 may be omitted.

As fully discussed hereinbefore, a speech dialogue service may be offered through various input interfaces other than a voice.

It will be appreciated that various embodiments of the present invention can be realized in the form of hardware, software or any combination of hardware and software.

Any such software may be stored in a non-transitory or non-volatile computer readable storage medium. The non-transitory computer readable storage medium stores one or more programs (e.g. software modules), the one or more programs comprising instructions, which when executed by one or more processors in an electronic device, cause the electronic device to perform a method according to the present invention.

Any such software may be stored in the form of volatile or non-volatile storage such as, for example, a storage device like a Read Only Memory (ROM), whether erasable or rewritable or not, or in the form of memory such as, for example, Random Access Memory (RAM), memory chips, device or integrated circuits or on an optically or magnetically readable medium such as, for example, a Compact Disk (CD), Digital Versatile Disc (DVD), magnetic disk or magnetic tape and the like.

It will be appreciated that the storage devices and storage media are various embodiments of non-transitory machine-readable storage that are suitable for storing a program or programs comprising instructions that, when executed, implement various embodiments of the present invention. Accordingly, various embodiments provide a program comprising code for implementing a system, apparatus or method according to any claim, aspect, embodiment or example described herein, and a non-transitory machine-readable storage storing such a program.

While the present invention has been illustrated and described with reference to various exemplary embodiments thereof, it will be understood by those skilled in the art that various changes in form and details may be made therein without departing from the scope of the present invention, as defined by the appended claims.

## Claims

1. An interfacing method for supporting a speech dialogue service, the interfacing method comprising:
executing an interface for the speech dialogue service;
receiving a user input, through the executed interface, including a voice input or a non-voice input;
when the received user input is the voice input, converting the voice input to text and transmitting, as a request signal to a server, at least one of the voice input and the converted text;
when the received user input is the non-voice input:
recognizing text of metadata contained in the non-voice input; **characterized by**
selecting a specific part among the recognized text through a filtering process; and
transmitting, as the request signal to the server, the specific part of the text extracted from the non-voice input;
receiving a result of dialogue recognition in response to the request signal from the server; and
executing a response to the received user input on the basis of the received result of dialogue recognition.

2. The interfacing method of claim 1, further comprising:
setting an input mode of the interface based on a user control,
wherein the setting the input mode comprises at least one of:
selecting a menu of the input mode displayed on a screen in response to an input; or
executing an application related to the input mode in response to a voice command.

3. The interfacing method of claim 1, 2 or 3, wherein, when the non-voice input is an image input, the method further comprises:
recognizing text from the image input through an optical character recognition process; and
selecting a further specific part among the recognized text through a filtering process.

4. The interfacing method of any preceding claim, further comprising:
receiving, from the server, a request for checking whether to apply an associated content provider determined by the server; and
checking whether to apply the associated content provider determined by the server, and transmitting a result of the checking to the server.

5. The interfacing method of claim 4, wherein the executing of the response to the received user input comprises executing the associated content provider when applicability of the associated content provider is accepted.

6. An interfacing device for supporting a speech dialogue service, the interfacing device comprising:
an input unit configured to receive a user input including a voice input and a non-voice input;
a communication unit configured to communicate with a server;
a control unit configured to:
execute an interface for the speech dialogue service, to receive the user input through the executed interface,
when the received user input is the voice input, convert the voice input to text and transmit, as a request signal to the server, at least one of the voice input and the converted text,
when the received user input is the non-voice input:
recognize text of metadata contained in the non-voice input;
**characterized by** the control unit being configured to
select a specific part among the recognized text through a filtering process; and
transmit, as the request signal to the server, the specific part of the text extracted from the non-voice input,
receive a result of dialogue recognition in response to the request signal from the server, and
execute a response to the received user input on the basis of the received result of dialogue recognition; and
an output unit configured to output a result of executing the response to the received user input.

7. The interfacing device of claim 6, wherein the control unit is further configured to set an input mode of the interface based on a user control, by performing at least one of selecting a menu of the input mode displayed on a screen in response to an input or executing an application related to the input mode in response to a voice command.

8. The interfacing device of claim 6 or 7, wherein, when the non-voice input is an image input, the control unit is further configured to recognize text from the image input through an optical character recognition process, and to select a further specific part among the recognized text through a filtering process.

9. The interfacing device of any of claims 6 to 8, wherein the control unit is further configured to receive, from the server, a request for checking whether to apply an associated content provider determined by the server, and to check whether to apply the associated content provider determined by the server, and to transmit a result of the checking to the server.

10. The interfacing device of claim 9, wherein the control unit is further configured to execute the associated content provider when applicability of the associated content provider is accepted.

11. At least one non-transitory processor readable medium for storing a computer program of instructions configured to be readable by at least one processor for instructing the at least one processor to execute a computer process for performing the method as recited in any of claims 1 to 5.

## Patentansprüche

1. Schnittstellenverfahren zur Unterstützung eines Sprachdialogdienstes, wobei das Schnittstellenverfahren folgendes umfasst:
Ausführen einer Schnittstelle für den Sprachdialogdienst;
Empfangen einer Benutzereingabe über die ausgeführte Schnittstelle, die eine Spracheingabe und eine Nicht-Spracheingabe aufweist;
wenn es sich bei der empfangenen Benutzereingabe um die Spracheingabe handelt, Umwandeln der Spracheingabe in Text und Übermitteln wenigstens einer der Spracheingabe und/oder des umgewandelten Texts als Anforderungssignal an einen Server;
wenn es sich bei der empfangenen Spracheingabe um die Nicht-Spracheingabe handelt:
Erkennen des Texts von Metadaten, die in der Nicht-Spracheingabe enthalten sind; **gekennzeichnet durch**
Auswählen eines spezifischen Teils des erkannten Textes durch einen Filterprozess; und
Übermitteln des spezifischen Teils des aus der Nicht-Spracheingabe extrahierten Textes als das Anforderungssignal an den Server;
Empfangen eines Ergebnisses der Dialogerkennung als Reaktion auf das Anforderungssignal von dem Server; und
Ausführen einer Reaktion auf die empfangene Benutzereingabe auf der Basis des empfangenen Ergebnisses der Dialogerkennung.

2. Schnittstellenverfahren nach Anspruch 1, ferner umfassend:
Einstellen eines Eingabemodus der Schnittstelle auf der Basis einer Benutzersteuerung;
wobei das Einstellen des Eingabemodus mindestens eines der folgenden umfasst:
Auswählen eines Menüs des Eingabemodus, das auf einem Bildschirm als Reaktion auf eine Eingabe angezeigt wird; oder
Ausführen einer Applikation in Bezug auf den Eingabemodus als Reaktion auf einen Sprachbefehl.

3. Schnittstellenverfahren nach Anspruch 1, 2 oder 3, wobei, wenn die Nicht-Spracheingabe eine Bildeingabe ist, das Verfahren ferner folgendes umfasst:
Erkennen von Text aus der Bildeingabe durch einen optischen Zeichenerkennungsprozess; und
Auswählen eines weiteren spezifischen Teils aus dem erkannten Text über einen Filterprozess.

4. Schnittstellenverfahren nach einem der vorstehenden Ansprüche, ferner umfassend:
Empfangen einer Anforderung zur Prüfung von dem Server, ob ein durch den Server bestimmter Inhaltsanbieter angewendet werden soll; und
Prüfen, ob der durch den Server bestimmte zugeordnete Inhaltsanbieter angewendet werden soll, und Übermitteln eines Ergebnisses der Prüfung an den Server.

5. Schnittstellenverfahren nach Anspruch 4, wobei das Ausführen der Reaktion auf die empfangene Benutzereingabe das Ausführen des zugeordneten Inhaltsanbieters umfasst, wenn die Anwendbarkeit des zugeordneten Inhaltsanbieters akzeptiert wird.

6. Schnittstellenvorrichtung zur Unterstützung eines Sprachdialogdienstes, wobei die Schnittstellenvorrichtung folgendes umfasst:
eine Eingabeeinheit, die für den Empfang einer Benutzereingabe gestaltet ist, die eine Spracheingabe und eine Nicht-Spracheingabe aufweist;
eine Kommunikationseinheit, die für die Kommunikation mit einem Server gestaltet ist;
eine Steuereinheit, die für folgende Zwecke gestaltet ist:
Ausführen einer Schnittstelle für den Sprachdialogdienst, um die Benutzereingabe über die ausgeführte Schnittstelle zu empfangen;
wenn es sich bei der empfangenen Benutzereingabe um die Spracheingabe handelt, Umwandeln der Spracheingabe in Text und Übermitteln wenigstens einer der Spracheingabe und/oder des umgewandelten Texts als Anforderungssignal an einen Server;
wenn es sich bei der empfangenen Spracheingabe um die Nicht-Spracheingabe handelt:
Erkennen des Texts von Metadaten, die in der Nicht-Spracheingabe enthalten sind; **gekennzeichnet durch**
Auswählen eines spezifischen Teils des erkannten Textes durch einen Filterprozess; und
Übermitteln des spezifischen Teils des aus der Nicht-Spracheingabe extrahierten Textes als das Anforderungssignal an den Server;
Empfangen eines Ergebnisses der Dialogerkennung als Reaktion auf das Anforderungssignal von dem Server; und
Ausführen einer Reaktion auf die empfangene Benutzereingabe auf der Basis des empfangenen Ergebnisses der Dialogerkennung; und
eine Ausgabeeinheit, die für die Ausgabe eines Ergebnisses der Ausführung der Reaktion auf die empfangene Benutzereingabe gestaltet ist.

7. Schnittstellenvorrichtung nach Anspruch 6, wobei die Steuereinheit ferner so gestaltet ist, dass sie einen Eingabemodus der Schnittstelle auf der Basis der Benutzersteuerung einstellt, indem mindestens eines der folgenden ausgeführt wird: Auswählen eines Menüs des Eingabemodus, das auf einem Bildschirm als Reaktion auf eine Eingabe angezeigt wird, und/oder Ausführen einer Applikation in Bezug auf den Eingabemodus als Reaktion auf einen Sprachbefehl.

8. Schnittstellenvorrichtung nach Anspruch 6 oder 7, wobei, wenn die Nicht-Spracheingabe eine Bildeingabe ist, die Steuereinheit ferner gestaltet ist zum Erkennen von Text aus der Bildeingabe durch einen optischen Zeichenerkennungsprozess; und zum Auswählen eines weiteren spezifischen Teils aus dem erkannten Text über einen Filterprozess.

9. Schnittstellenvorrichtung nach einem der Ansprüche 6 bis 8, wobei die Steuereinheit ferner gestaltet ist zum Empfangen einer Anforderung zur Prüfung von dem Server, ob ein durch den Server bestimmter Inhaltsanbieter angewendet werden soll, und zum Prüfen, ob der durch den Server bestimmte zugeordnete Inhaltsanbieter angewendet werden soll, und zum Übermitteln eines Ergebnisses der Prüfung an den Server.

10. Schnittstellenvorrichtung nach Anspruch 9, wobei die Steuereinheit ferner gestaltet ist zum Ausführen des zugeordneten Inhaltsanbieters, wenn die Anwendbarkeit des zugeordneten Inhaltsanbieters akzeptiert wird.

11. Mindestens ein nichtflüchtiges, durch einen Prozessor lesbares Medium zum Speichern eines Computerprogramms von Anweisungen, das so gestaltet ist, dass es durch mindestens einen Prozessor lesbar ist, um den mindestens einen Prozessor anzuweisen, einen Computerprozess auszuführen, um das Verfahren nach einem der Ansprüche 1 bis 5 auszuführen.

## Revendications

1. Procédé d'interface pour supporter un service de dialogue vocal, le procédé d'interface comprenant les étapes suivantes :
exécution d'une interface pour le service de dialogue vocal ;
réception d'une entrée utilisateur, par le biais de l'interface exécutée, comprenant une entrée vocale ou une entrée non vocale ;
lorsque l'entrée utilisateur reçue est une entrée vocale, conversion de l'entrée vocale en texte et transmission, comme signal de demande à un serveur, de l'entrée vocale et/ou du texte converti ;
lorsque l'entrée utilisateur reçue est l'entrée non vocale :
reconnaissance du texte des métadonnées contenues dans l'entrée non vocale ; **caractérisé par** les étapes suivantes
sélection d'une partie spécifique parmi le texte reconnu par le biais d'un processus de filtrage ; et
transmission, comme signal de demande au serveur, de la partie spécifique du texte extrait de l'entrée non vocale ;
réception d'un résultat de reconnaissance de dialogue en réponse au signal de demande du serveur ; et
exécution d'une réponse à l'entrée utilisateur reçue sur la base du résultat reçu de la reconnaissance de dialogue.

2. Procédé d'interface selon la revendication 1, comprenant en outre l'étape suivante :
définition d'un mode d'entrée de l'interface basé sur une commande d'utilisateur,
la définition du mode d'entrée comprenant au moins l'une des étapes suivantes :
sélection d'un menu du mode d'entrée affiché sur un écran en réponse à une entrée ; ou
exécution d'une application liée au mode d'entrée en réponse à une commande vocale.

3. Procédé d'interface selon la revendication 1, 2 ou 3, lorsque l'entrée non vocale est une entrée d'image, le procédé comprenant en outre les étapes suivantes :
reconnaissance du texte à partir de l'entrée d'image par le biais d'un processus de reconnaissance optique des caractères ; et
sélection d'une autre partie spécifique parmi le texte reconnu par le biais d'un processus de filtrage.

4. Procédé d'interface selon l'une quelconque des revendications précédentes, comprenant en outre les étapes suivantes :
réception, en provenance du serveur, d'une demande de vérification du fait de savoir s'il convient d'appliquer un fournisseur de contenu associé déterminé par le serveur ; et
vérification du fait de savoir s'il convient d'appliquer le fournisseur de contenu associé déterminé par le serveur, et transmission du résultat de la vérification au serveur.

5. Procédé d'interface selon la revendication 4, l'exécution de la réponse à l'entrée utilisateur reçue comprenant l'exécution du fournisseur de contenu associé lorsque l'applicabilité du fournisseur de contenu associé est acceptée.

6. Dispositif d'interface pour supporter un service de dialogue vocal, le dispositif d'interface comprenant :
une unité d'entrée conçue pour recevoir une entrée utilisateur comprenant une entrée vocale et une entrée non vocale ;
une unité de communication conçue pour communiquer avec un serveur ;
une unité de commande conçue pour :
exécuter une interface pour le service de dialogue vocal, pour recevoir l'entrée utilisateur par le biais de l'interface exécutée,
lorsque l'entrée utilisateur reçue est une entrée vocale, convertir l'entrée vocale en texte et transmettre, comme signal de demande au serveur, l'entrée vocale et/ou le texte converti,
lorsque l'entrée utilisateur reçue est l'entrée non vocale :
reconnaître le texte des métadonnées contenues dans l'entrée non vocale ; **caractérisé par le fait que** l'unité de commande est conçue pour
sélectionner une partie spécifique parmi le texte reconnu par le biais d'un processus de filtrage ; et
transmettre, comme signal de demande au serveur, la partie spécifique du texte extrait de l'entrée non vocale,
recevoir un résultat de reconnaissance de dialogue en réponse au signal de demande du serveur, et
exécuter une réponse à l'entrée utilisateur reçue sur la base du résultat reçu de la reconnaissance de dialogue ; et
une unité de sortie conçue pour fournir un résultat de l'exécution de la réponse à l'entrée utilisateur reçue.

7. Dispositif d'interface selon la revendication 6, l'unité de commande étant en outre conçue pour définir un mode d'entrée de l'interface basé sur une commande de l'utilisateur, en sélectionnant un menu du mode d'entrée affiché sur un écran en réponse à une entrée et/ou en exécutant une application liée au mode d'entrée en réponse à une commande vocale.

8. Dispositif d'interface selon la revendication 6 ou 7, lorsque l'entrée non vocale est une entrée d'image, l'unité de commande étant en outre conçue pour reconnaître le texte de l'entrée d'image par le biais d'un processus de reconnaissance optique de caractères, et pour sélectionner une autre partie spécifique parmi le texte reconnu par le biais d'un processus de filtrage.

9. Dispositif d'interface selon l'une des revendications 6 à 8, l'unité de commande étant en outre conçue pour recevoir, du serveur, une demande de vérification du fait de savoir s'il convient d'appliquer un fournisseur de contenu associé déterminé par le serveur, et pour vérifier le fait de savoir s'il convient d'appliquer le fournisseur de contenu associé déterminé par le serveur, et pour transmettre un résultat de la vérification au serveur.

10. Dispositif d'interface selon la revendication 9, l'unité de commande étant en outre conçue pour exécuter le fournisseur de contenu associé lorsque l'applicabilité du fournisseur de contenu associé est acceptée.

11. Au moins un support lisible par un processeur non transitoire pour stocker un programme informatique d'instructions conçu de sorte à être lisible par au moins un processeur pour ordonner à ce dernier d'exécuter un processus informatique pour exécuter le procédé selon l'une quelconque des revendications 1 à 5.
